# EUROPÄISCHE PATENTSCHRIFT

(11) **EP 3 840 987 B1**
(45) Veröffentlichungstag und Bekanntmachung des Hinweises auf die Patenterteilung: **05.04.2023**
(21) Anmeldenummer: 19769429.2
(22) Anmeldetag: 11.09.2019
(51) Int. Cl.: B60P 7/08

(54) **ANSCHLAGVORRICHTUNG**
STOP ARRANGEMENT
DISPOSITIF DE BUTÉE

(30) Priorität: 08.10.2018 DE 202018105749 U
(43) Veröffentlichungstag der Anmeldung: 30.06.2021
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Andrejewski - Honke Patent- und Rechtsanwälte Partnerschaft mbB
(86) Internationale Anmeldenummer: PCT/EP2019/074250
(87) Internationale Veröffentlichungsnummer: WO 2020/074199

(56) Entgegenhaltungen:
- EP-B1- 2 745 030
- DE-C- 700 068
- DE-U1-202007 016 321
- DE-U1-202014 103 520
- DE-U1-202015 106 712
- DE-U1-202017 105 212

## Beschreibung

Die Erfindung betrifft eine Anschlagvorrichtung für Gurt- und/oder Flächensicherungsmittel zur Sicherung von Ladung auf einer Ladefläche von Transportfahrzeugen, mit wenigstens einem Haken zum Eingriff in eine Öffnung einer Transportwand, und mit einem Verbindungselement zum Anschluss eines oder mehrerer Sicherungsmittel, wobei das Verbindungselement lösbar an den Haken angeschlossen ist, wobei ferner das Verbindungselement mit einem Scharnierfortsatz ausgerüstet ist, welcher in eine Fortsatzaufnahme an einem den Haken tragenden Anschlagelement lösbar eingreift, und wobei der Scharnierfortsatz und die Fortsatzaufnahme in miteinander verbundenem Zustand fluchtende Bohrungen für einen hierin lösbar eingreifenden Scharnierbolzen aufweisen.

Anschlagvorrichtungen werden beispielsweise in der EP 3 154 820 B1 der Anmelderin beschrieben. Ähnliche Anschlagvorrichtungen sind auch Gegenstand der WO 2016/116305 A1 sowie der DE 20 2017 105 212 U1 der Anmelderin. Mit Hilfe der Anschlagvorrichtung lassen sich beispielsweise Gurtbänder und/oder flächige Sicherungsmittel wie Sicherungsnetze zwischen beispielsweise zwei sich gegenüberliegenden Transportwänden bzw. Bordwänden eines Transportfahrzeuges spannen. Dadurch kann ein Laderaum des Transportfahrzeuges segmentiert werden, sodass im Segment befindliche Ladung gesichert und vor einem Hin- und Herrutschen bewahrt wird. Das hat sich grundsätzlich bewährt.

Zu diesem Zweck wird die Anschlagvorrichtung in jeweils Öffnungen in der Transportwand eingesteckt bzw. eingehängt. Die Öffnungen können dabei in der Transportwand als solcher realisiert sein oder aber in oder auf der Transportwand befestigten Schienen, Lochwänden etc. vorhanden sein. Durch die Realisierung einer Vielzahl solcher Öffnungen in der Transportwand ist eine Anbringung der betreffenden Anschlagvorrichtungen und folglich auch des Gurtbandes bzw. des Sicherungsnetzes an gewünschter Stelle möglich. Das hat sich grundsätzlich bewährt.

Vergleichbare Anschlagvorrichtungen werden in der DE 20 2005 015 419 U1 beschrieben. Hier geht es um eine Transportgutsicherung für Fahrzeuge. Diese ist mit mindestens einer Verzurröse zur Aufnahme von Befestigungsmitteln wie Seilen oder dergleichen ausgerüstet. Die Verzurröse ist an einem beweglich ausgebildeten Verzurrbügel angeordnet, der lösbar in ein Randprofil an einer Ladefläche eingreifen kann.

Beim weiteren Stand der Technik nach der DE 700 068 C geht es insgesamt um ein Hakengeschirr, dessen Hakenteile mit Fortsätzen versehen sind, die sich gegen ein Widerlager legen. Das Widerlager wird durch einen um eine Geschirrlängsachse drehbaren, etwa ellipsenförmigen Kurvenring gebildet. Der Kurvenring kann durch Federbolzen in einer Sperrlage gesichert werden. Außerdem sind noch zwei Hakenteile realisiert, die in geschlossener Stellung eine Öse bilden. Die Haken sind an einem Querstück gelagert, welches seinerseits an einem Geschirrunterteil mittels eines Gewindes befestigt wird.

Der nächstkommende Stand der Technik wird in der DE 20 2007 016 321 U1 behandelt. Hier geht es insgesamt um einen Einhängehaken. Außerdem wird ein flexibles Flächengebilde für ein Fahrzeug, insbesondere ein Trennnetz, beschrieben, welches mit wenigstens einem solchen Einhängehaken zur Befestigung an einem Fahrzeuginnenraum ausgerüstet ist. Der Einhängehaken verfügt über einen Hauptabschnitt, der seinerseits einen Anlagebereich aufweist, an dem ein von einem Bügel umfasster Einhängeabschnitt anliegt, wenn der Einhängehakten mit Hilfe eines Zugmittels kraftbeaufschlagt wird.

Außerdem ist der Einhängehaken derart ausgebildet, dass die zuvor bereits beschriebenen Hakenbauteile bei einer Zugkraftbeaufschlagung des Einhängehakens in eine Schließstellung beaufschlagt werden. Dadurch sollen Funktionssicherheit und Handhabbarkeit insgesamt verbessert werden. Allerdings ist der Aufbau relativ komplex und lässt sich das Sicherungsmittel bzw. das an dieser Stelle angesprochene Trennnetz nicht ohne weiteres von dem Einhängehaken schnell und zuverlässig lösen. Die EP 2 745 030 B1 betrifft eine Schäkelvorrichtung, die unter andrem über ein Rückhaltemittel verfügt, das in einem Rückhalteloch aufgenommen wird. Das Rückhaltemittel kann dabei auch einen mit einer Feder ausgestatteten Stift umfassen. Insgesamt sollen hierdurch Sicherheitsanforderungen erfüllt werden.

Schließlich gehört zum Stand der Technik noch eine vergleichbare Anschlagvorrichtung, wie sie Gegenstand der US 2005/0141980 A1 ist. In diesem Fall sind spezielle Anschlagvorrichtungen realisiert, die sich in einer Öffnung der Transportwand eines Transportfahrzeuges lösbar festlegen lassen. Dazu sind jeweils Schwenkhaken an der Anschlagvorrichtung vorgesehen.

Der Stand der Technik hat sich grundsätzlich bewährt, wenn es darum geht, ein Gurtband oder auch ein Sicherungsnetz flexibel und in unterschiedlicher Position zwischen gegenüberliegenden Transportwänden bzw. (Lade-)Bordwänden bei einem Transportfahrzeug anzubringen. Allerdings treten in der Praxis oftmals Situationen auf, dass die fragliche Anschlagvorrichtung nicht oder nur schwer gelöst werden kann. Zwar sind typischerweise das Gurtband bzw. das Sicherungsnetz längenveränderbar ausgebildet. Es kommt jedoch vor, dass die beim Transport verrutschte Ladung das fragliche Sicherungsmittel soweit verformt hat, dass die längenveränderbare Auslegung alleine nicht ausreicht, um die betreffende Anschlagvorrichtung aus der Öffnung in der Transportwand zu entfernen. Das ist jedoch beispielsweise dann erforderlich, wenn durch das Sicherungsmittel gesicherte Ladung entnommen werden soll. Hier setzt die Erfindung ein.

Der Erfindung liegt das technische Problem zugrunde, eine derartige Anschlagvorrichtung für Gurt- und/oder Flächensicherungsmittel zur Sicherung von Ladung auf einer Ladefläche von Transportfahrzeugen so weiterzuentwickeln, dass eine einfache und schnelle Entnahme von Ladung zur Verfügung gestellt wird.

Zur Lösung dieser technischen Problemstellung ist eine gattungsgemäße Anschlagvorrichtung im Rahmen der Erfindung dadurch gekennzeichnet, dass der Scharnierbolzen mit zumindest einem federbelasteten Rastelement und mit einer Handhabe ausgerüstet ist, wobei es sich bei der Handhabe um einen Griff oder eine Öse handelt, die von einem Bediener beispielsweise mit einem oder mit mehreren Fingern ergriffen wird, um den Scharnierbolzen aus den fluchtenden Bohrungen zu entfernen bzw. in diese wieder einzustecken.

Wie einleitend bereits beschrieben, stellt das Verbindungselement seinerseits die Kopplung mit dem einen oder mehreren Sicherungsmitteln her. Zu diesem Zweck verfügt das Verbindungselement regelmäßig über eine Öse für die Kopplung mit einem Gurtband und/oder einem Gurt eines Sicherungsnetzes. Grundsätzlich kann die Öse auch zum Anschluss einer Sicherungsplane, von Sicherungsseilen etc. genutzt und eingesetzt werden. Im Allgemeinen ist das Verbindungselement und die in diesem Zusammenhang realisierte Öse jedoch für die Kopplung mit einem textilen Gurtband und/oder einem Gurt eines textilen Sicherungsnetzes vorgesehen und ausgelegt.

Das Gurtband kann dabei aus einem oder mehreren Kunststoffgewebegurten aufgebaut sein. Bei dem Sicherungsnetz handelt es sich typischerweise um ein solches, welches aus sich kreuzenden Kunststoffgewebegurten bzw. Gurtbändern aufgebaut ist. Das wird mit Bezug zur Figurenbeschreibung noch näher erläutert. Dabei können das Gurtband bzw. das Sicherungsnetz insgesamt auch längenvariabel ausgebildet sein. Auf diese Weise lässt sich das Gurtband bzw. das Sicherungsnetz nach seiner Anbringung zwischen zwei sich gegenüberliegenden Bordwänden bzw. Transportwänden spannen. Dazu kann im einfachsten Fall ein Klemmschloss vorgesehen sein.

Da erfindungsgemäß das Verbindungselement lösbar an den Haken angeschlossen ist, lässt sich das fragliche Sicherungsmittel, also im Beispielfall das Gurtband bzw. das Sicherungsnetz, schnell und problemlos vom Haken lösen, welcher seinerseits im Eingriff in der Öffnung der Transportwand verbleibt. Eine solche Schnellöffnung bzw. Notöffnung lässt sich von einer Bedienperson unschwer realisieren, um beispielsweise hinter dem Sicherungsmittel befindliche Ladegüter zu entnehmen. Hierbei handelt es sich vorteilhaft um Pakete. Nach der Entnahme kann das fragliche Sicherungsmittel wieder geschlossen bzw. mit dem Haken verbunden werden, indem das Verbindungselement wieder an den Haken angeschlossen wird. Das alles lässt sich schnell und intuitiv realisieren, sodass trotz einwandfreier Sicherung der auf der Ladefläche befindlichen Ladung ein einfaches Be- und Entladen ermöglicht und zur Verfügung gestellt wird. Hierin sind die wesentlichen Vorteile zu sehen.

Um dies im Detail zu realisieren und umzusetzen, ist das Verbindungselement erfindungsgemäß mit dem Scharnierfortsatz ausgerüstet. Der Scharnierfortsatz greift zu diesem Zweck lösbar in die Fortsatzaufnahme an dem den Haken tragenden Anschlagelement ein. Der Scharnierfortsatz und die Fortsatzaufnahme weisen in miteinander verbundenem Zustand erfindungsgemäß fluchtende Bohrungen auf. In die fluchtenden Bohrungen greift in montiertem Zustand der hierin lösbar eingreifende Scharnierbolzen ein und kann in diese eingesteckt werden. Der Scharnierbolzen fungiert erfindungsgemäß zugleich als Achse bzw. Schwenkachse für den Scharnierfortsatz.

Das heißt, der Scharnierfortsatz lässt sich gegenüber der Fortsatzaufnahme verschwenken, und zwar um eine überwiegend senkrechte Achse, die von dem in die fluchtenden Bohrungen eingreifenden Scharnierbolzen definiert wird.

Um folglich das Verbindungselement von dem Haken zu lösen, muss konkret lediglich der Scharnierbolzen aus den fluchtenden Bohrungen entfernt werden. Als Folge hiervon kommt der Scharnierfortsatz am Verbindungselement von der Fortsatzaufnahme am Haken frei und ist folglich das Verbindungselement vom Haken getrennt. Gleiches gilt dann natürlich auch für das jeweils an das Verbindungselement angeschlossene Sicherungsmittel. Dadurch kann das Sicherungsmittel bedarfsweise geöffnet werden, um beispielsweise hierdurch gesicherte Ladung, im Beispielfall ein oder mehrere Pakete, problemlos entnehmen zu können. Die auf diese Weise realisierte Notöffnung im Sicherungsmittel findet sich dabei randseitig der zugehörigen Transportwand.

Nach der Entnahme des einen oder der mehreren Pakete kann das Verbindungselement erneut mit dem Haken gekoppelt werden. Dazu wird der Scharnierbolzen in die fluchtenden Bohrungen zwischen dem Scharnierfortsatz und der Fortsatzaufnahme eingesteckt. Zu diesem Zweck ist der Scharnierbolzen erfindungsgemäß mit der Handhabe ausgerüstet. Bei der Handhabe handelt es sich um einen Griff oder eine Öse, die von einem Bediener beispielsweise mit einem oder mehreren Fingern ergriffen wird, um den Scharnierbolzen aus den fluchtenden Bohrungen zu entfernen bzw. in diese wieder einzustecken.

Damit der Scharnierbolzen nicht im normalen Betrieb aus den fluchtenden Bohrungen unbeabsichtigt entfernt werden kann, verfügt der Scharnierbolzen erfindungsgemäß über zumindest ein federbelastete Rastelement. Bei dem federbelasteten Rastelement kann es sich im einfachsten Fall um eine federbelastete Kugel oder allgemein ein federbelastetes Riegelelement handeln. Grundsätzlich können auch zwei sich beispielsweise gegenüberliegende federbelastete Rastelemente realisiert sein. So oder so ist die Auslegung in diesem Zusammenhang meistens so getroffen, dass das Rastelement in eine Ausnehmung in der Fortsatzaufnahme eingreift. Es ist auch denkbar, dass das Rastelement die Fortsatzaufnahme bzw. die Bohrung in der Fortsatzaufnahme zur Aufnahme des Scharnierbolzens übergreift.

So oder so lässt sich der Scharnierbolzen mit Hilfe des federbelasteten Rastelementes in die fluchtenden Bohrungen von einerseits dem Scharnierfortsatz und andererseits der Fortsatzaufnahme einstecken und hierin lösbar verankern. Um den Scharnierbolzen aus den fluchtenden Bohrungen wieder herauszuziehen, muss lediglich die Kraft des federbelasteten Rastelementes von einem Bediener überwunden werden. Das gelingt schnell und problemlos, indem der Bediener die Handhabe am Scharnierbolzen entsprechend ergreift und den Scharnierbolzen aus den beiden fluchtenden Bohrungen herauszieht.

Als Folge hiervon ist das Verbindungselement und damit das Sicherungsmittel vom Haken frei. Der Scharnierbolzen als solcher kann vorteilhaft als Metallstift oder auch Kunststoffstift ausgebildet sein. Darüber hinaus ist die Auslegung meistens so getroffen, dass das Anschlagelement den Scharnierfortsatz U-förmig umgreift. Außerdem sind meistens zwei Hakenfortsätze realisiert. Das heißt, die Erfindung greift regelmäßig auf zwei Haken als Bestandteil der Anschlagvorrichtung zurück, bei denen es sich im Allgemeinen um zwei an das Anschlagelement angeschlossene Hakenfortsätze handelt. Dabei ist die Auslegung so getroffen, dass sich die beiden Hakenfortsätze in Bezug auf das demgegenüber mittige Anschlagelement gegenüberliegen.

Die beiden Hakenfortsätze können jeweils flächenseitig mit einer gewölbten Anlagefläche ausgerüstet sein. Die gewölbte Anlagefläche hintergreift im Allgemeinen in eingebautem Zustand eine die Öffnung in der Transportwand umgebende Fläche. Auf diese Weise lässt sich die erfindungsgemäße Anschlagvorrichtung insgesamt gegenüber der Transportwand hin- und herschwenken. Das gelingt bis zu einem durch die Wölbung vorgegebenen Maß. Die Schwenkbarkeit wird insgesamt noch dadurch unterstützt, dass das Verbindungselement mit dem Scharnierfortsatz ausgerüstet ist und in die Fortsatzaufnahme eingreift. In Verbindung mit dem die fluchtenden Bohrungen lösbar durchgreifenden Scharnierbolzen wird hierdurch zusätzlich ein Scharnier bzw. Scharniergelenk zwischen dem Verbindungselement einerseits und dem Haken andererseits und konkret zwischen dem Scharnierfortsatz am Verbindungselement und der Fortsatzaufnahme am Haken zur Verfügung gestellt. Diese Scharniergelenkigkeit in Verbindung mit der Schwenkbarkeit aufgrund der jeweils flächenseitig der Hakenfortsätze vorgesehenen gewölbten Anlageflächen stellt insgesamt eine große Beweglichkeit des Verbindungselementes gegenüber dem in der Öffnung festgelegten Haken zur Verfügung. Dadurch kann das zwischen den Anschlagvorrichtungen gespannte bzw. sich erstreckende Sicherungsmittel unschwer auch Verformungen durch hin- und herrutschende Ladungen aufnehmen.

Schließlich ist die Auslegung meistens noch so getroffen, dass das mittige Anschlagelement gegenüber den gewölbten Anlageflächen an den beiden sich gegenüberliegenden Hakenfortsätzen als Abschluss der Hakenfortsätze vorspringt. Auf diese Weise werden Anschläge definiert. Diese Anschläge fungieren in Verbindung mit den beiden Hakenfortsätzen zur lösbaren Verankerung der Anschlagvorrichtung in einer meistens als Schlüssellochöffnung ausgebildeten Öffnung in der Transportwand. Grundsätzlich können natürlich auch andere Öffnungen erfindungsgemäß realisiert werden.

Die Hakenfortsätze und das Anschlagelement definieren im Allgemeinen eine Baueinheit. Diese Baueinheit kann beispielsweise aus Kunststoff hergestellt sein und folglich ein Kunststoffspritzgussteil definieren. Auch der Scharnierfortsatz und das Verbindungselement definieren im Allgemeinen eine Baueinheit, die wiederum aus Kunststoff hergestellt sein kann. Auch in diesem Fall empfiehlt es sich, auf ein Kunststoffspritzgussteil zurückzugreifen.

Folgerichtig wird insgesamt eine kostengünstige und leichte Anschlagvorrichtung zur Verfügung gestellt, die sich einerseits problemlos und lösbar in einer zugehörigen Öffnung in der Transportwand des Transportfahrzeuges verankern lässt und andererseits zum lösbaren Anschluss des Sicherungsmittels eingerichtet und ausgelegt ist. Denn dazu ist das Verbindungselement zum Anschluss des einen oder der mehreren Sicherungsmittel lösbar an den Haken angeschlossen. Auf diese Weise kann das Sicherungsmittel problemlos und schnell randseitig im Bereich der Transportwand geöffnet werden, um beispielsweise dahinter befindliche Pakete zu ergreifen oder hier abzulegen. Das alles gelingt schnell und problemlos. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Anschlagvorrichtung in Verbindung mit einem als Sicherungsnetz ausgebildeten Sicherungsmittel und
- Fig. 2: die Anschlagvorrichtung im Detail.

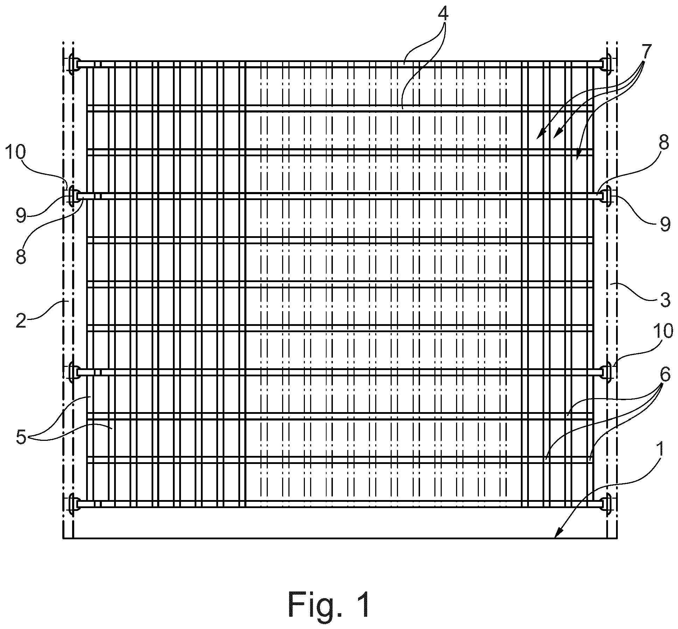

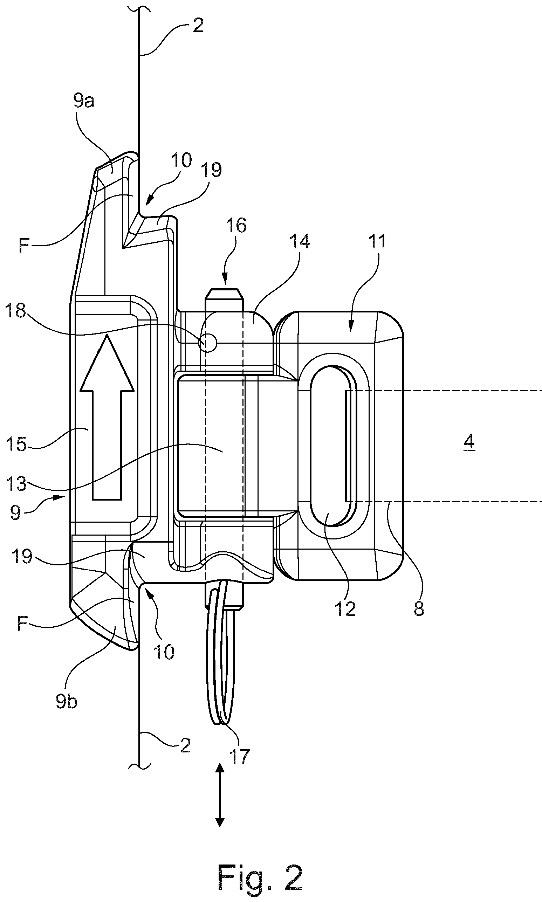

In der Fig. 1 ist eine Vorrichtung zur Sicherung von Ladung auf einer Ladefläche 1 dargestellt. Die Vorrichtung setzt sich aus einerseits einer nachfolgend mit Bezug zur Fig. 2 noch näher zu beschreibenden Anschlagvorrichtung und andererseits einem flächigen Sicherungsmittel 4, 5 zusammen. Die Ladefläche 1 gehört zu einem Laderaum 1, 2, 3, welcher neben der Ladefläche bzw. Bodenfläche 1 zusätzlich noch mit zwei Seitenwänden 2, 3 bzw. Transportwänden 2, 3 ausgerüstet ist. Außerdem mag der Laderaum 1, 2, 3 noch mit einem Dach bzw. einer Dachfläche versehen sein, die jedoch im Beispielfall nach der Fig. 1 nicht dargestellt ist, gleichwohl vorhanden sein kann.

Wie bereits erläutert, verfügt die Anschlagvorrichtung über ein flächiges Sicherungsmittel 4, 5, bei dem es sich im Ausführungsbeispiel um ein Sicherungsnetz 4, 5 aus sich kreuzenden Gurten 4, 5 handelt. Die Gurte 4, 5 sind einerseits als Horizontalgurte 4 und andererseits Vertikalgurte 5 ausgebildet. Außerdem sind die Gurte 4, 5 in Kreuzungspunkten 6 miteinander verbunden. Insbesondere die Horizontalgurte 4 können längenveränderlich ausgelegt sein, um beispielsweise das Sicherungsnetz 4, 5 zwischen den beiden sich gegenüberliegenden Seitenwänden bzw. Transportwänden 2, 3 gespannt zu werden. Grundsätzlich können auch die Vertikalgurte 5 längenveränderbar ausgelegt sein.

Die Kopplung der Gurte 4, 5 im jeweiligen Kreuzungspunkt 6 kann adhäsiv erfolgen. Es ist aber auch möglich, dass die beiden Gurte 4, 5 miteinander vernäht sind. Auch eine Wirkverbindung im Sinne einer Kopplung der beiden Gurte 4, 5 durch eigene Verbindungsfäden ist möglich.

Man erkennt, dass sich die Gurte 4, 5 bzw. die Horizontalgurte 4 und die Vertikalgurte 5 im jeweiligen Kreuzungspunkt 6 im Wesentlichen rechteckförmig schneiden. Auf diese Weise werden von den Gurten 4, 5 umschlossene rechteckförmige Maschen 7 gebildet, die im Ausführungsbeispiel gleich groß ausgeführt sind. Selbstverständlich kann aufgrund der flexiblen Fertigung auch mit unterschiedlichen Größen der einzelnen Maschen 7 des Sicherungsnetzes 4, 5 gearbeitet werden. Das ist jedoch nicht dargestellt.

Die einzelnen Gurte 4, 5 sind nach dem Ausführungsbeispiel als gewebte Kunststoffgurte aus beispielsweise Polyesterfäden ausgelegt. Grundsätzlich können auch andere Kunststoffe zur Herstellung der Gurte bzw. Kunststoffgurte 4, 5 eingesetzt werden. Darüber hinaus erkennt man randseitige Anschlagmittel 8, 9. Bei den Anschlagmitteln 8, 9 handelt es sich im Rahmen des Ausführungsbeispiels um einerseits eine Gurtschlaufe 8 und andererseits einen in die Gurtschlaufe 8 eingeschlauften Haken 9. Bei dem Haken 9 bzw. Adapter kann es sich um einen Kunststoffadapter handeln, dessen Detailaufbau nachfolgend mit Bezug zur Fig. 2 noch näher erläutert wird.

Jedenfalls kann das flächige Sicherungsmittel 4, 5 bzw. das Sicherungsnetz 4, 5 mit Hilfe der beschriebenen randseitigen Anschlagmittel 8, 9 zwischen zwei sich jeweils gegenüberliegenden Befestigungspunkten 10 bzw. mehreren dieser Befestigungspunkte 10 gespannt werden. Bei den Befestigungspunkten 10 handelt es sich im Ausführungsbeispiel um jeweils Öffnungen 10 zum Eingriff der Haken 9 in die zugehörige Transportwand 2, 3. Tatsächlich sind nach dem Ausführungsbeispiel in der Fig. 1 mehrere Öffnungen 10 in vertikaler Anordnung übereinander in der zugehörigen Transportwand bzw. Seitenwand 2, 3 vorgesehen. In die fraglichen Öffnungen 10 sind jeweils die Haken 9 bzw. Adapter lösbar eingehängt oder greifen hierin lösbar ein. Mit Hilfe der jeweiligen Gurtschlaufen 8 können nach dem Ausführungsbeispiel die Horizontalgurte 4 längenveränderlich ausgebildet werden. Dazu mag die fragliche Gurtschlaufe 8 über ein nicht ausdrücklich dargestelltes Klemmschloss verfügen.

Der Detailaufbau der Anschlagvorrichtung wird nun mit Bezugnahme zur Fig. 2 näher erläutert. Dort erkennt man den zuvor bereits angesprochenen Haken 9. Der Haken 9 greift in die zugehörige Öffnung 10 in der Transportwand 2, 3 lösbar ein. Dazu mag es sich bei der Öffnung 10 nicht einschränkend um eine Schlüssellochöffnung handeln, wie dies im Detail in der EP 154 820 B1 der Anmelderin beschrieben wird. Hierauf ist die Erfindung selbstverständlich nicht beschränkt.

Jedenfalls verfügt der Haken 9 über ein Verbindungselement 11 zum Anschluss des einen oder der mehreren Sicherungsmittel 4, 5. Im Rahmen des Ausführungsbeispiels ist an das betreffende Verbindungselement 11 ein jeweiliger Horizontalgurt 4 des Sicherungsnetzes 4, 5 entsprechend der Darstellung in der Fig. 1 angeschlossen. Dazu verfügt das Verbindungselement 11 über eine Öse 12, in welche der Horizontalgurt 4 bzw. die an dieser Stelle realisierte Gurtschlaufe 8 eingreift.

Erfindungsgemäß ist nun das Verbindungselement 11 lösbar an den Haken 9 angeschlossen. Zu diesem Zweck verfügt das Verbindungselement 11 über einen Scharnierfortsatz 13, welcher in eine Fortsatzaufnahme 14 eingreift. Die Fortsatzaufnahme 14 ist an ein den Haken 9 tragendes Anschlagelement 15 angeschlossen. Der Scharnierfortsatz 13 am Verbindungselement 8 greift lösbar in die Fortsatzaufnahme 14 an dem besagten Anschlagelement 15 ein, welcher seinerseits den Haken 9 trägt. Tatsächlich setzt sich der Haken 9 ausweislich des Ausführungsbeispiels im Endeffekt aus zwei Hakenfortsätzen 9a, 9b zusammen. Die beiden Hakenfortsätze 9a, 9b sind an das demgegenüber mittige Anschlagelement 15 angeschlossen und liegen sich in Bezug auf das mittige Anschlagelement 15 gegenüber.

Der Scharnierfortsatz 13 und die Fortsatzaufnahme 14 verfügen in miteinander verbundenem Zustand über jeweils fluchtende Bohrungen für einen hierin eingreifenden Scharnierbolzen 16. Der Scharnierbolzen 16 ist mit einer Handhabe 17 bzw. einem Griff ausgerüstet, mit dessen Hilfe ein Bediener den Scharnierbolzen 16 in die fluchtenden Bohrungen zwischen dem Scharnierfortsatz 13 und der Fortsatzaufnahme 14 einstecken und demgegenüber wieder entfernen kann, wie dies ein entsprechender Doppelpfeil in der Fig. 2 deutlich macht. Außerdem verfügt der Scharnierbolzen 16 über zumindest ein federbelastetes Element 18, bei dem es sich im Ausführungsbeispiel und nicht einschränkend um eine federbelastete Kugel 18 handelt, die in eine entsprechende Ausnehmung in der Fortsatzaufnahme 14 eingreift. Der Scharnierbolzen 16 kann zu diesem Zweck als Metallstift oder Kunststoffstift ausgebildet sein.

Das Anschlagelement 14 umgreift den Scharnierfortsatz 13 insgesamt U-förmig. In Verbindung mit dem in die fluchtenden Bohrungen eingreifenden Scharnierbolzen 16 wird auf diese Weise ein Scharniergelenk zwischen dem Haken 9 bzw. dessen Hakenfortsätzen 9a, 9b einerseits und dem Verbindungselement 8 bzw. dem hieran angeschlossenen Sicherungsmittel 4, 5 andererseits zur Verfügung gestellt. Dadurch kann das Sicherungsmittel 4, 5 bzw. das Sicherungsnetz 4, 5 nach dem Ausführungsbeispiel um die durch den Scharnierbolzen 16 gebildete Achse gegenüber dem in die jeweilige Öffnung 10 eingesetzten Haken 9 hin- und herverschwenkt werden.

Die zuvor beschriebene Verschwenkbarkeit wird im Rahmen des Ausführungsbeispiels noch dadurch unterstützt und verstärkt, dass die beiden Hakenfortsätze 9a, 9b jeweils flächenseitig, das heißt in Richtung auf die Fläche der Transportwand 2, 3 mit einer gewölbten Anlagefläche F ausgerüstet sind. Die fragliche Anlagefläche F an den beiden Hakenfortsätzen 9a, 9b hintergreift in eingebautem Zustand eine die Öffnung 10 in der betreffenden Transportwand bzw. Seitenwand 2, 3 umgebende Fläche, wie man in der Fig. 2 erkennt. Auf diese Weise lässt sich der gesamte Haken 9 zusätzlich bis zu einem durch die Wölbung der fraglichen Fläche F vorgegebenen Maß hin- und herschwenken, wie dies vergleichbar im Stand der Technik nach der EP 3 154 820 B1 bereits beschrieben wurde. Das ist jedoch nicht zwingend.

Das mittige Anschlagelement 15 verfügt dann noch gegenüber den zuvor bereits beschriebenen gewölbten Anlageflächen F an den betreffenden Hakenfortsätzen 9a, 9b über einen Abschluss, sodass auf diese Weise Anschläge 19 definiert werden. Diese Anschläge 19 am mittigen Anschlagelement 15 begrenzen eine Hin- und Herbewegung des Hakens 9 bzw. des mittigen Anschlagelementes 15 innerhalb der Öffnung 10 in der Transportwand 2, 3, wie man anhand der Fig. 2 erkennt.

Die Hakenfortsätze 9a, 9b und das Anschlagelement 15 definieren insgesamt eine Baueinheit. Gleiches gilt für den Scharnierfortsatz 13 und das Verbindungselement 8. Beide Baueinheiten 9, 15 einerseits und 13, 8 andererseits sind jeweils aus Kunststoff hergestellt und können vorteilhaft als Kunststoffspritzgussteil ausgeführt werden. Als Folge hiervon lässt sich die Anschlagvorrichtung besonders kostengünstig herstellen und verfügt über ein nur geringes Gewicht. Das erleichtert die Anbringung in den Öffnungen 10 der Seitenwände bzw. Transportwände 2, 3. Außerdem lässt sich hierdurch die Anschlagvorrichtung unschwer aus den betreffenden Öffnungen 10 entnehmen. Bei den Öffnungen 10 kann es sich um Schlüssellochöffnungen oder Langlochöffnungen oder dergleichen handeln.

## Patentansprüche

1. Anschlagvorrichtung für Gurt- und/oder Flächensicherungsmittel (4, 5) zur Sicherung von Ladung auf einer Ladefläche (1) von Transportfahrzeugen, mit wenigstens einem Haken (9) zum Eingriff in eine Öffnung (10) einer Transportwand (2, 3), und mit einem Verbindungselement (8) zum Anschluss eines oder mehrerer Sicherungsmittel (4, 5), wobei
das Verbindungselement (8) lösbar an den Haken (9) angeschlossen ist, wobei ferner
das Verbindungselement (8) mit einem Scharnierfortsatz (13) ausgerüstet ist, welcher in eine Fortsatzaufnahme (14) an einem den Haken (9) tragenden Anschlagelement (15) lösbar eingreift, und wobei
der Scharnierfortsatz (13) und die Fortsatzaufnahme (14) in miteinander verbundenem Zustand fluchtende Bohrungen für einen hierin lösbar eingreifenden Scharnierbolzen (16) aufweisen,
**dadurch gekennzeichnet, dass**
der Scharnierbolzen (16) mit zumindest einem federbelasteten Rastelement (18) und mit einer Handhabe (17) ausgerüstet ist, wobei
es sich bei der Handhabe (17) um einen Griff oder eine Öse handelt, die von einem Bediener beispielsweise mit einem oder mehreren Fingern ergriffen wird, um den Scharnierbolzen (16) aus den fluchtenden Bohrungen zu entfernen bzw. in diese wieder einzustecken.

2. Vorrichtung nach Anspruch 1, **dadurch gekennzeichnet, dass** das Rastelement (18) in eine Ausnehmung in der Fortsatzaufnahme (14) eingreift.

3. Vorrichtung nach Anspruch 1 oder 2, **dadurch gekennzeichnet, dass** der Scharnierbolzen (16) als Metallstift oder Kunststoffstift ausgebildet ist.

4. Vorrichtung nach einem der Ansprüche 1 bis 3, **dadurch gekennzeichnet, dass** das Anschlagelement (15) den Scharnierfortsatz (13) U-förmig umgreift.

5. Vorrichtung nach einem der Ansprüche 1 bis 4, **dadurch gekennzeichnet, dass** das Anschlagelement (15) zwei angeschlossene Hakenfortsätze (9a, 9b) aufweist.

6. Vorrichtung nach Anspruch 5, **dadurch gekennzeichnet, dass** sich die beiden Hakenfortsätze (9a, 9b) in Bezug auf das demgegenüber mittige Anschlagelement (15) gegenüberliegen.

7. Vorrichtung nach Anspruch 5 oder 6, **dadurch gekennzeichnet, dass** die beiden Hakenfortsätze (9a, 9b) jeweils flächenseitig mit einer gewölbten Anlagefläche (F) ausgerüstet sind, welche in eingebautem Zustand eine die Öffnung (10) umgebende Fläche hintergreift.

8. Vorrichtung nach einem der Ansprüche 5 bis 7, **dadurch gekennzeichnet, dass** das mittige Anschlagelement (15) gegenüber den gewölbten Anlagenflächen (F) als Abschluss der Hakenfortsätze (9a, 9b) vorspringt, sodass auf diese Weise Anschläge (19) definiert werden.

9. Vorrichtung nach einem der Ansprüche 1 bis 8, **dadurch gekennzeichnet, dass** der Haken (9) und das Anschlagelement (15) eine Baueinheit (9, 15) aus beispielsweise Kunststoff definieren.

10. Vorrichtung nach einem der Ansprüche 1 bis 9, **dadurch gekennzeichnet, dass** der Scharnierfortsatz (13) und das Verbindungselement (8) eine Baueinheit (13, 8) aus beispielsweise Kunststoff beschreiben.

11. Vorrichtung nach einem der Ansprüche 1 bis 10, **dadurch gekennzeichnet, dass** das Verbindungselement (8) eine Öse (12) für die Kopplung mit einem Gurtband und/oder einem Gurt (4) eines Sicherungsnetzes (4, 5) aufweist.

## Claims

1. Fixing device for webbing and/or planar securing means (4, 5) for securing a load on a loading surface (1) of transporting vehicles, with at least one hook (9) for engagement in an opening (10) of a transporting wall (2, 3), and with a connecting element (8) for connecting one or more securing means (4, 5), wherein
the connecting element (8) is releasably connected to the hook (9), wherein further
the connecting element (8) is equipped with a hinge extension (13), which releasably engages in an extension holder (14) on an arresting element (15) bearing the hook (9), and wherein
when connected to each other, the hinge extension (13) and the extension recess (14) comprises flush drilled holes for a hinge bolt (16) releasably engaging therein,
**characterised in that**
the hinge bolt (16) is equipped with at least one spring-loaded catch element (18) and with a handle (17), wherein
the handle (17) is a grip or an eye, which an operator grasps with, for example, one of more fingers in order to remove the hinge bolt (16) from the flush drilled holes or to insert it into them again.

2. Device according to claim 1, **characterised in that** the catch element (18) engages in a recess in the extension holder (14).

3. Device according to claim 1 or 2, **characterised in that** the hinge bolt (16) is designed as a metal pin or plastic pin.

4. Device according to any one of claims 1 to 3, **characterised in that** the arresting element (15) surrounds the hinge extension (13) in a U-shaped manner.

5. Device according to any one of claims 1 to 4, **characterised in that** the arresting element (15) comprises two attached hook extensions (9a, 9b).

6. Device according to claim 5, **characterised in that** the two hook extensions (9a, 9b) are opposite in relation to the arresting element (15) that is central in relation thereto.

7. Device according to claim 5 or 6, **characterised in that** on the face side, the two hook extensions (9a, 9b) are each provided with an arched contact surface (F), which in the assembled state engages behind a surface surrounding the opening (10).

8. Device according to any one of claims 5 to 7, **characterised in that** with regard to the arched contact surfaces (F), the central arresting element (15) projects as a conclusion of the hook extensions (9a, 9b) so that in this way stops (19) are defined.

9. Device according to any one of claims 1 to 8, **characterised in that** the hook (9) and the arresting element (15) define one assembly (9, 15) made of plastic, for example.

10. Device according to any one of claims 1 to 9, **characterised in that** the hinge extension (13) and the connecting element (8) describe one assembly (13, 8) made of plastic, for example.

11. Device according to any one of claims 1 to 10, **characterised in that** the connecting element (8) comprises an eye (12) for coupling to a webbing and/or a strap (4) of a securing net (4, 5).

## Revendications

1. Dispositif de butée pour des moyens de sécurisation par sangle et / ou des moyens de sécurisation plans (4, 5), destinés à sécuriser une charge sur une surface de chargement (1) de véhicules de transport, pourvu d'au moins un crochet (9) destiné à s'engager dans un orifice (10) d'une paroi de transport (2, 3), et pourvu d'un élément de liaison (8) destiné à raccorder un ou plusieurs moyens de sécurisation (4, 5),
l'élément de liaison (8) étant raccordé de manière amovible sur le crochet (9), par ailleurs
l'élément de liaison (8) étant équipé d'un prolongement à charnière (13), lequel s'engage de manière amovible dans un logement de prolongement (14) d'un élément de butée (15) portant le crochet (9) et
lorsqu'ils sont reliés l'un à l'autre, le prolongement à charnière (13) et le logement de prolongement (14) comportant des perçages alignés pour un boulon de charnière (16) qui s'y engage de manière amovible,
**caractérisé en ce que**
le boulon de charnière (16) est équipé d'au moins un élément d'enclenchement (18) contraint par ressort et d'une manette (17),
la manette (17) est une poignée ou un oeillet, qu'un utilisateur peut par exemple saisir avec un ou plusieurs doigts, pour retirer le boulon de charnière (16) du perçage aligné ou pour l'y réinsérer.

2. Dispositif selon la revendication 1, **caractérisé en ce que** l'élément d'enclenchement (18) s'engage dans un évidement dans le logement de prolongement (14).

3. Dispositif selon la revendication 1 ou 2, **caractérisé en ce que** le boulon de charnière (16) est conçu sous la forme d'un goujon métallique ou d'un goujon en matière plastique.

4. Dispositif selon l'une quelconque des revendications 1 à 3, **caractérisé en ce que** l'élément de butée (15) entoure le prolongement à charnière (13) en forme de U.

5. Dispositif selon l'une quelconque des revendications 1 à 4, **caractérisé en ce que** l'élément de butée (15) comporte deux prolongements en crochet (9a, 9b) raccordés.

6. Dispositif selon la revendication 5, **caractérisé en ce que** les deux prolongements en crochet (9a, 9b) sont mutuellement opposés par rapport à l'élément de butée (15) central par rapport à eux.

7. Dispositif selon la revendication 5 ou 6, **caractérisé en ce que** les deux prolongements en crochet (9a, 9b) sont équipés chacun du côté plat d'une surface d'appui (F) bombée, qui en position montée s'accroche par l'arrière dans une surface entourant l'orifice (10).

8. Dispositif selon l'une quelconque des revendications 5 à 7, **caractérisé en ce que** l'élément de butée (15) central saillit par rapport aux surfaces d'appui (F) bombées en tant que terminaison des prolongements en crochet (9a, 9b), de telle sorte que des butées (19) soient définies de cette manière.

9. Dispositif selon l'une quelconque des revendications 1 à 8, **caractérisé en ce que** le crochet (9) et l'élément de butée (15) définissent un module (9, 15) en matière plastique par exemple.

10. Dispositif selon l'une quelconque des revendications 1 à 9, **caractérisé en ce que** le prolongement à charnière (13) et l'élément de liaison (8) décrivent un module (13, 8) en matière plastique par exemple.

11. Dispositif selon l'une quelconque des revendications 1 à 10, **caractérisé en ce que** l'élément de liaison (8) comporte un œillet (12), destiné à être couplé à une sangle et / ou à un harnais (4) d'un filet de sécurisation (4, 5).
